# EUROPEAN PATENT APPLICATION

(11) **EP 4 513 888 A1**
(43) Date of publication of application: **26.02.2025**
(21) Application number: 24153493.2
(22) Date of filing: 23.01.2024
(51) Int. Cl.: H04R 1/02, H04R 1/28, G10K 11/00, F16F 1/377

(54) **IMPROVED SUSPENSION FOR AN ACOUSTIC PLAYBACK SYSTEM, AND ACOUSTIC PLAYBACK SYSTEMS**

(71) Applicant: EPOS Group A/S, 2750 Ballerup (DK)
(72) Inventor: PONTOPPIDAN, Maja Lund, DK-2750 Ballerup (DK); INGEMANSSON, Niklas, DK-2750 Ballerup (DK); ZEEBERG, Leif, DK-2920 Charlottenlund (DK); ROURA, Marti Meya, DK-2750 Ballerup (DK); HANSEN, Martin Feilberg, DK-2750 Ballerup (DK); HANSEN, Anders Røser, DK-2750 Ballerup (DK)
(74) Representative: Demant

(57) **Abstract**

A suspension for an acoustic playback system and configured to connect a speaker box to a housing is disclosed. The suspension includes a body comprising a first end, a second end opposite the first end, a top surface, a bottom surface opposite the top surface, a first side surface, and a second side surface opposite the first side surface; a first axis extending from the first end to the second end; a second axis extending from the top surface to the bottom surface; a third axis extending from the first side surface to the second side surface; and at least one aperture extending from the first side surface to the second side surface; wherein the body has a higher rigidity along the first axis than along the second axis; and wherein the body has a higher rigidity along the third axis than the second axis .

## Description

### TECHNICAL FIELD

The present application relates to the field of acoustic playback systems. In particular, the present application relates to an improved suspension for an acoustic playback system.

### SUMMARY

Disclosed herein are embodiments of a suspension. The suspension can be for (e.g., for use in, configured to be used in) an acoustic playback system and configured to connect a speaker box to a housing. The suspension can be configured to connect a speaker box to a housing of an acoustic playback system. The suspension includes a body comprising a first end, a second end opposite the first end, a top surface, a bottom surface opposite the top surface, a first side surface, and a second side surface opposite the first side surface. The suspension includes a first axis extending from the first end to the second end. The suspension includes a second axis extending from the top surface to the bottom surface. The suspension includes a third axis extending from the first side surface to the second side surface. The body has a higher rigidity along the first axis than along the second axis. The body has a higher rigidity along the third axis than the second axis.

Advantageously, embodiments of the disclosed suspension can provide for a compromise between acoustic and mechanics in an acoustic playback system. The suspension can be configured to be connected between a speaker box on a first end and a housing on a second end. The suspension can be more flexible (e.g., less rigid) in one axis than another, allowing movement of the speaker box so that the suspension can follow such movement. In other words, the suspension can be most flexible in the direction of the speaker driver movement.

This can further allow for the suspension being able to make a more compact design. By having more spatial control over a location of the speaker box via the suspension with the different rigidity, then there does not need to be as much airgap around the speaker box that you would need if movement was allowed in all directions.

Further advantages of the disclosed suspension include isolating vibrations by having lower rigidity along certain axes while still maintaining strength by having higher rigidity along others. Embodiments of the disclosed suspensions can have lower tolerances, use more space, and are easier to manufacture and/or assemble as compared to fully flexible suspensions.

The disclosed embodiments of the suspension can allow a more known position when constructing an acoustic playback system due to its smaller tolerances. This can allow for improved sealing of the speaker box. A suspension that has flexibility in all positions would not have one known position. The higher rigidity of the disclosed suspension embodiments would allow a more consistent design, manufacturing, sound, and positioning.

Further disclosed herein are embodiments of an acoustic playback system including an embodiment of the suspension disclosed herein. By having an acoustic playback system using the disclosed suspensions, this allows decoupling between microphones and speakers so that the acoustic playback system will deliver better sound quality. Also, the robustness of the particular suspension allows for minimal manufacturing issues of the acoustic playback system.

Disclosed herein are embodiments of suspension for use in an acoustic playback system and acoustic playback systems themselves. An acoustic playback system can be understood as an acoustic playback device, an acoustical playback system, an audio reproduction system, and/or and audio reproduction device. An acoustic playback system can be one of a sound bar, a speaker, a video bar, a loudspeaker, and a subwoofer. An acoustic playback system can include a communication bar, a satellite speaker, a Bluetooth speaker, a built-in monitor and/or television speaker, and a speaker phone. An acoustic playback system can include one or more speakers.

### Suspension for an acoustic playback system

Disclosed herein are embodiments of a suspension (e.g., connector, connecting element, coupler, coupling element, mount, driver suspension, suspending unit, suspension unit). The suspension can be considered a decoupling and/or isolating component. The suspension can be a means for connecting a speaker box to a housing. The suspension can be configured to connect, such as suspend, a speaker box (e.g., of an acoustic playback system) to a housing (e.g., a housing of the acoustic playback system). The suspension can be configured to connect, such as suspend, a speaker box (e.g., of an acoustic playback system) to an outer housing. The suspension can be configured to connect, such as suspend, a speaker box (e.g., of an acoustic playback system) to a chassis (e.g., a housing).

The suspension includes a body. In certain examples, the suspension is the body, and the terms suspension and body can be used interchangeably. The body can be understood to fully define the suspension. The body can include one or more apertures, sides, ends, and/or surfaces as discussed herein. The body can define a general three-dimensional shape of the suspension unit.

In one or more example suspensions, the body is configured to isolate vibrations from the speaker box. For example, the body is configured to isolate vibrations between the speaker box and the housing.

The body (e.g., the suspension) can be defined by outer surfaces and/or ends and/or sides. The terms surfaces and/or ends and/or sides can be used interchangeably and can have the same meanings. The surfaces and/or ends and/or sides can be understood to include curves, straight planes, lines, and/or other three-dimensional shapes. The particular delineations of the different surfaces and/or ends and/or sides are well understood by a person skilled in the art.

The body can have a first end. The body can have a second end. The second end can be opposite the first end. The first end can be configured to be generally directed towards the speaker box when the suspension is installed. The first end may be sized and/or shaped to fit within a component of the speaker box. The second end can be configured to be generally directed towards the housing when the suspension is installed. The second end may be sized and/or shaped to fit within a component of the housing. The first end and the second end may be symmetrical or asymmetrical.

In one or more example suspensions, the first end is a curved surface. In one or more example suspended, the first end is a flat surface. In one or more example suspensions, the second end is a curved surface. In one or more example suspended, the second end is a flat surface.

The first end and/or the second end can be orthogonal to the top surface and/or the bottom surface. The first end and/or the second end can be orthogonal to the first side surface and/or the second side surface.

The body can have a top surface. The body can have a bottom surface. The bottom surface can be opposite the first surface. The bottom surface can be a flat surface. The top surface can be a flat surface. In certain implementations, the bottom surface is parallel to the top surface. The terms bottom and top are not limited, and the bottom surface can be used as the topmost surface of the body and the top surface can be used as the bottommost surface.

The bottom surface and the top surface can be symmetric or asymmetric. In certain example, the top surface and/or the bottom surface can be shaped like a half circle attached to a rectangle. The top surface and/or the bottom surface can be shaped like a half-stadium, a half-pill, a half-discorectangle, or a half-obround shape.

The bottom surface and/or the top surface can be orthogonal to the first end and/or the second end. The bottom surface and/or the top surface can be orthogonal to the first side surface and/or the second side surface.

In one or more example suspensions, the body includes a first attachment aperture. In one or more example suspensions, the body includes a second attachment aperture. In one or more example suspensions, both the first attachment aperture and the second attachment aperture extend at least partially from the top surface to the bottom surface. In one or more example suspensions, both the first attachment aperture and the second attachment aperture extend fully from the top surface to the bottom surface. In one or more example suspensions, one or more of the first attachment aperture and the second attachment aperture extend fully from the top surface to the bottom surface.

As used herein, an aperture (e.g., the at least one aperture, first attachment aperture, second attachment aperture) can be understood to be a hole, divot, cutout, lumen, opening.

In certain examples, the first attachment aperture is nearer to the first end than the second end. In certain example, the second attachment aperture is nearer to the second end than the first end.

While not limiting to the particular shape, the first attachment aperture can have a circular (e.g., generally circular) shape. The second attachment aperture can be shaped like an oval or a stadium.

In certain embodiments, the first attachment aperture and the second attachment aperture can have the same shape. In other embodiments, the first attachment aperture and the second attachment aperture can have different shapes. In some embodiments, the first attachment aperture and/or the second attachment aperture can extend fully from the top surface to the bottom surface. In some embodiments, the first attachment aperture and/or the second attachment aperture can extend partially from the top surface to the bottom surface (or partially from the bottom surface to the top surface).

The first attachment aperture can be configured to receive an attachment component (e.g., a fixpoint) of the speaker box. The second attachment aperture can be configured to receive an attachment component (e.g., fixpoint) of the housing. The attachment component of the housing and/or the speaker box can be a separate component, such as an attachment member like a screw, or can be a portion of the respective housing or speaker box configured to fit within the first attachment aperture or the second attachment aperture.

The body can have a first side surface. The body can have a second side surface. The second side surface can be opposite the first side surface.

The first side surface and/or the seconds side surface can be orthogonal to the top surface and/or the bottom surface. The first side surface and/or the seconds side surface can be orthogonal to the first end and/or the second end.

The first end, second end, top surface, bottom surface, first side surface, and second side surface can define the outer dimensions of the body (e.g., of the suspension). In certain examples, an open aperture is used and can define a portion of the outer dimension of the body, such as forming a portion of the top surface and/or the bottom surface.

A number of axes can be defined for the suspension (e.g., the body). A first axis extends from the first end to the second end. A second axis extends from the top surface to the bottom surface. A third axis extends from the first side surface to the second side surface.

The body (e.g., the suspension) can further includes at least one aperture extending from the first side surface to the second side surface (e.g., between the first side surface and the second side surface). The at least one aperture can extend partially from the first side surface to the second side surface. The at least one aperture can extend fully between the first side surface and the second side surface.

In one or more example suspensions, the at least one aperture is a single aperture (e.g., one aperture). In one or more example suspensions, the at least one aperture is a plurality of apertures.

In certain examples, the at least one aperture can include 1, 2, 3, or 4 apertures. In certain examples, the at least one aperture can include 1, 2, 3, or 4 apertures extending fully from the first side surface of the second side surface.

As mentioned, the at least one aperture may only extend partially from the first side surface to the second side surface. In certain embodiments, the at least one aperture may only extend partially from the second side surface to the first side surface. In certain embodiments, a first aperture of the at least one aperture may extend partially from the second side surface to the first side surface and a second aperture of the at least one aperture may extend partially from the first side surface to the second side surface. In other words, the at least one aperture may include a plurality of apertures, with a first (or more) apertures on the first side surface and a second (or more) apertures on the second side surface.

The first aperture and the second aperture of the at least one aperture may be aligned with one another. In other words, they may be located at approximately the same position between the first end and the second end and/or between the top surface and the bottom surface.

The first aperture and the second aperture of the at least one aperture may be offset with one another. In other words, they may be located offset of one another between the first end and the second end and/or between the top surface and the bottom surface.

In one or more example suspensions, the at least one aperture is generally in the middle between the first end and the second end. In one or more example suspensions, the at least one aperture is in the middle between the first end and the second end.

The at least one aperture can be located closer to one of the first end or the second end. The at least one aperture can be located closer to one of the top surface or the bottom surface.

In one or more example suspensions, the at least one aperture comprises at least 15% a cross section of the body. In one or more example suspensions, the at least one aperture comprises at least 10% a cross section of the body. In one or more example suspensions, the at least one aperture comprises at least 15% a cross section of the first side surface and/or the second side surface. In one or more example suspensions, the at least one aperture comprises at least 10% a cross section of the first side surface and/or the second side surface.

The at least one aperture can, in certain embodiments, make up 10-20% of the first side surface and/or the second side surface.

In one or more example suspensions, the at least one aperture forms the body into an X cross-sectional shape or an H cross-sectional shape. In one or more example suspensions, the at least one aperture forms the first side surface and/or the second side surface into an X cross-sectional shape or an H cross-sectional shape.

In one or more example suspensions, the at least one aperture comprises a closed aperture. In other words, the at least one aperture is fully surrounded by the first side surface and/or second side surface. For example, the entirety of the cross section of the at least one aperture is fully defined.

In one or more example suspensions, the at least one aperture comprises an open aperture. In other words, the at least one aperture is only partially surrounded by the first side surface and/or second side surface. For example, the entirety of the cross section of the at least one aperture is not fully defined. As an example, at least a portion of the top surface and/or the bottom surface is a part of the at least one aperture.

In one or more example suspensions, the at least one aperture comprises an open aperture and a closed aperture.

Combinations of open apertures and closed apertures can be used to adjust the rigidity of the body. In other words, the at least one aperture can be used to adjust the rigidity of the body.

Rigidity can be defined as the inability of the suspension (e.g., body) to be bent or forced out of shape along a particular axis. Having a high rigidity can be understood as having a lower flexibility. Having a high rigidity can be understood as having a lower compliance. Having a high rigidity can be understood as having a higher stiffness. The different rigidity can be formed by the particular geometry of the suspension. For example, how the material is distributed in the particular geometric shape of the suspension.

The body can have a higher rigidity along the first axis than along the second axis. The body can have a higher rigidity along the third axis than the second axis. In certain examples, the body can have higher rigidity along the third axis than the first axis.

In one or more example embodiments, the suspension can have different rigidities along at least two of the first axis, the second axis, and the third axis. In one or more example embodiments, the suspension can have different rigidities along each of the first axis, the second axis, and the third axis.

Embodiments of the disclosed suspension are considered partially flexible suspensions. In other words, the discloses suspension may be a partially restricted suspension. The suspension can be a 2-axis restricted suspension. The suspension can be a 1-axis flexible suspension. The disclosed suspensions are not fully flexible suspensions.

The rigidity of the suspension can be affected by the at least one aperture. For example, as discussed herein, the particular shapes and/or designs can affect the rigidity of the suspension along certain axes.

In one or more example suspensions, the at least one aperture has a square cross section. The at least one aperture can have a circular and/or ovaloid cross section. The at least one aperture can have a triangular cross section. The at least one aperture can have a rhombus cross section. The at least one cross section can have other polygonal cross sections as well.

The at least one aperture can include a plurality of apertures, each of the plurality of apertures having the same shape. The at least one aperture can include a plurality of apertures, at least one of the plurality of apertures having a different shape than another of the plurality of the apertures.

The body can be formed of one or more materials (e.g., a combination of materials). For example, the body can be a rubber body. In one or more example suspensions, the body is a silicone body.

### Acoustic playback system:

In an aspect of the present application, an acoustic playback system is provided. An acoustic playback system can be understood as an acoustic playback device, an acoustical playback system, an audio reproduction system, and/or and audio reproduction device. An acoustic playback system can be one of a sound bar, a speaker, a video bar, a loudspeaker, and a subwoofer. An acoustic playback system can include a communication bar, a satellite speaker, a Bluetooth speaker, a built-in monitor and/or television speaker, and a speaker phone. An acoustic playback system can include one or more speakers.

The acoustic playback system may comprise a speaker box and a housing. The acoustic playback system further comprises a suspension connecting the speaker box to the housing. The suspension can be a suspension as disclosed herein.

The acoustic playback system includes a housing. The housing can be an outer housing. The outer housing can form an outer perimeter of the acoustic playback system. The outer housing can be shaped as desired for different aesthetic looks of the acoustic playback system.

The housing can be an intermediate housing, chassis, and/or secondary housing. These housings can be contained within an outer housing (e.g., contained by the outer housing, at least partially surrounded by the outer housing).

The housing can include any housing of the acoustic playback system. For example, the housing can be an outer housing of the acoustic playback system. The housing can be a chassis of the acoustic playback system. The housing can be an internal, such as an intermediate, housing of the acoustic playback system.

The speaker box can be used to hold a driver (e.g., speaker driver, primary driver, acoustic driver). As used herein, a driver can be, for example, a transducer and/or an audio source. For example, the driver can be a speaker. The driver can be configured to output audio (e.g., sound, audio signal, noise). The audio may be an audio configured for listening by a user of the acoustic playback system.

In certain examples, the suspension is connected to the speaker box and the housing by an attachment member of the respective speaker box and housing. In certain examples, the suspension is integrated with the speaker box and/or the housing.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIGS. 1A-1C schematically show an embodiment of a suspension according to the present disclosure;
FIGS. 2A-2B schematically show an embodiment of a suspension according to the present disclosure;
FIGS. 3A-3B schematically show an embodiment of a suspension according to the present disclosure;
FIGS. 4A-4B schematically show an embodiment of a suspension according to the present disclosure;
FIGS. 5A-5B schematically show an embodiment of a suspension according to the present disclosure;
FIGS. 6A-6B schematically shows an embodiment of a suspension according to the present disclosure;
FIG. 7 schematically shows an embodiment of a suspension according to the present disclosure;
FIGS. 8A-8C schematically show an embodiment of an acoustic playback system with a suspension according to the present disclosure, and
FIG. 9 illustrates force-displacement of a particular suspension of the disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of acoustic playback devices.

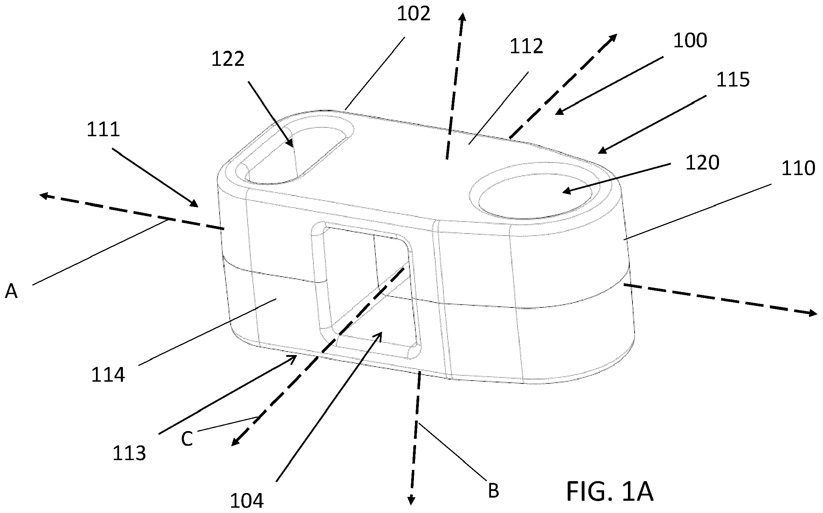

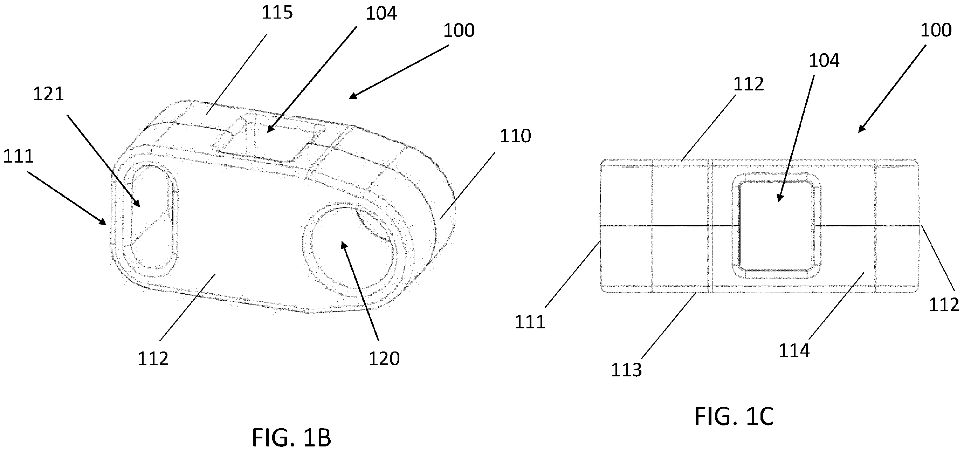

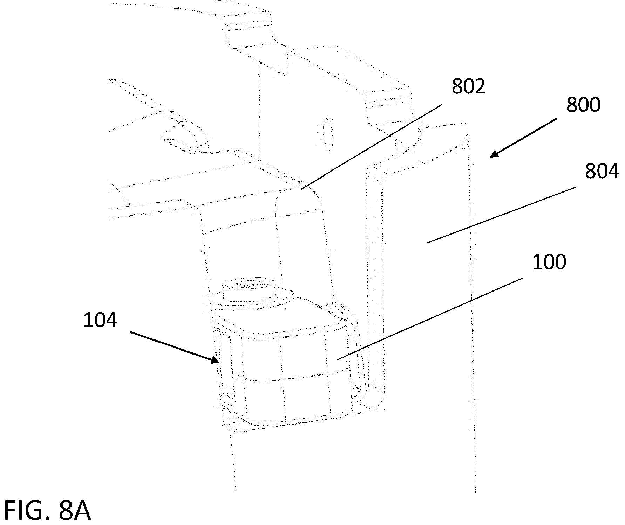

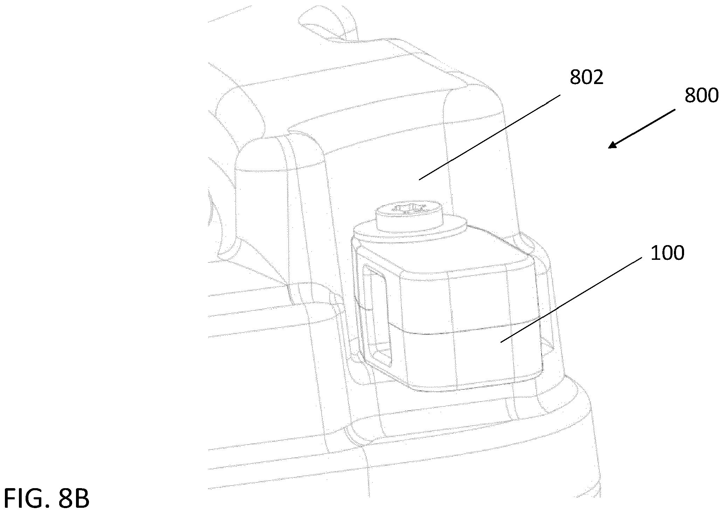

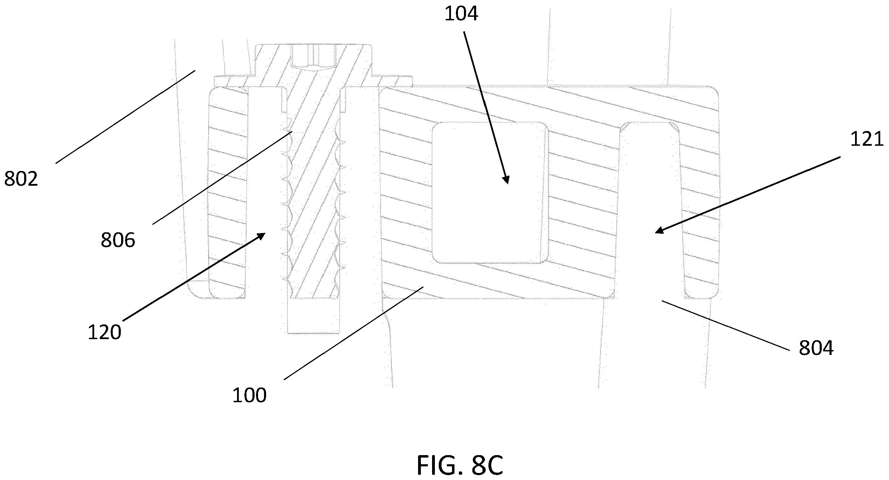

FIGS. 1A-1C schematically show an embodiment of a suspension according to the present disclosure. As shown, the suspension 100 can be for an acoustic playback system. The suspension 100 can be configured to connect a speaker box to a housing, such as shown in FIG. 8.

The suspension 100 includes a body 102. The body 102 can be configured to isolate vibrations from a speaker box.

The body 102 has a first end 110 and a second end 111 opposite the first end 110. The body 102 has a top surface 112 opposite a bottom surface 113. The body has a first side surface 114 opposite a second side surface 115. The different surfaces of the body 102 can delineate the outermost positions of the body 102, and thus the suspension 100.

Further, the suspension 100 can include a first axis A extending from the first end 110 to the second end 111, a second axis B extending from the top surface 112 to the bottom surface 113, and a third axis C extending from the first side surface 114 to the second side surface 115. Axes A, B, and C are orthogonal to one another.

The suspension 100 (e.g., the body 102) also includes at least one aperture 104 extending from the first side surface 114 to the second side surface 115. With respect to FIGS. 1A-1C, the at least one aperture 104 extends fully between the first side surface 114 and the second side surface 115. Further, as shown, the at least one aperture 104 is a single aperture which has a rectangular or square cross section. Further, the at least one aperture 104 is located generally in the middle between the first end 110 and the second end 111. The at least one aperture 104 shown in FIGS 1A-1B is at least 115% of a cross section of the body 102. In other words, the at least one aperture 104 is at least 115% of a cross section of the first side surface 114.

Further, as shown the at least one aperture 104 is a closed aperture. Therefore the at least one aperture 104 does not interact with (such as connect, contact, touch) the top surface 112 or the bottom surface 114. The at least one aperture is fully contained with the first side surface 114/second side surface 115.

The body 102 has a higher rigidity along the first axis A than along the second axis B. Further, the body 102 has a higher rigidity along the third axis C than the second axis B. This allows the body 102 to be more flexible when a force is applied along the second axis B.

FIGS. 1A-1C further show that the body 102 includes a first attachment aperture 120 and a second attachment aperture 121 extending at least partially from the top surface 112 to the bottom surface 113. The first attachment aperture 120 can be configured to receive a connecting member on a speaker box, while the second attachment aperture 121 can be configured to receive a connecting member of a housing.

Top surface 112 and bottom surface 113 can provide stiffness in parallel movement and maximum flexibility along the second axis B.

The body 102 can be formed of a material with some flexibility, such as rubber. For example, the body 102 can be a silicone body.

The suspension 100 can have a good compromise between manufacturability and support.

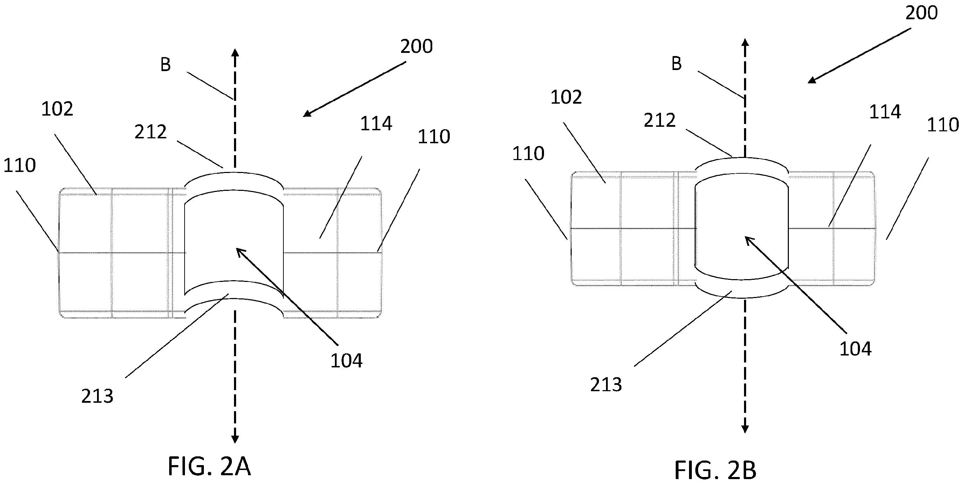

FIGS. 2A-2B schematically show an embodiment of a suspension 200 according to the disclosure. The suspension 200 includes any and/or all of the features discussed with respect to FIGS. 1A-1C. As shown, the top surface 212 and bottom surface 213 along the at least one aperture 104 are curved which allows the body 102, in particular the top surface 212 and the bottom surface 213 to bend (e.g., reshape, move, translate), which allows for more flexibility of the suspension 200. The suspension 200 can allow for more translation of the suspension.

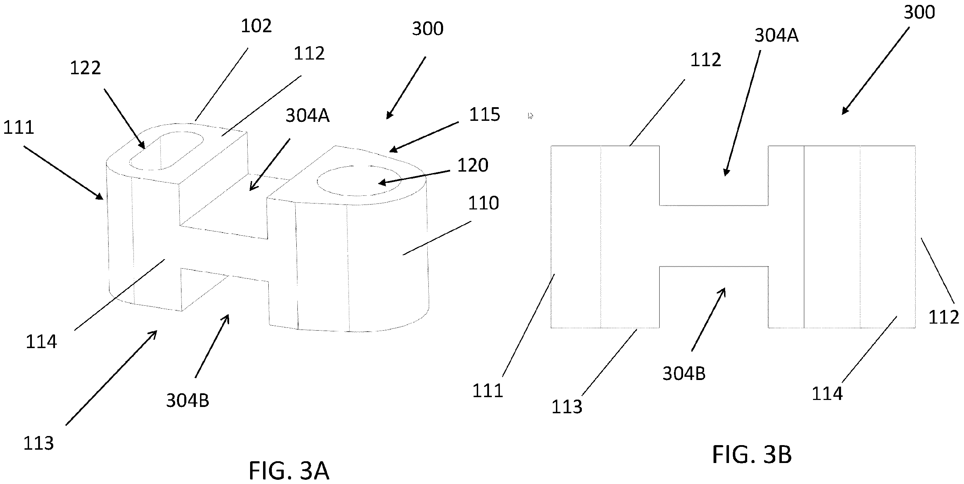

The curved surfaces
FIGS. 3A-3B schematically show an embodiment of a suspension according to the present disclosure. The suspension 300 includes any and/or all of the features discussed with respect to FIGS. 1A-1C.

As shown in FIGS. 3A-3B, the at least one aperture 304A/304B differs from that of FIGS. 1A-1C. For example, the at least one aperture 304A/304B is a plurality of apertures 304A/304B, as opposed to the single aperture 104.

Further, as shown the at least one aperture 304A/304B is an open aperture. Therefore the at least one aperture 304A/304B does interact with (such as connect, contact, touch) the top surface 112 or the bottom surface 114. The at least one aperture 304A/304B extends beyond the edges of the first side surface 114/second side surface 115.

As shown, the at least one aperture 304A/304B forms the body 102 into an H-shape. In particular, the at least one aperture 304A/304B forms the first side surface 114 and/or the second side surface 115 into an H-shape. The suspension 300 can have improved manufacturability for the simplicity of the design shapes.

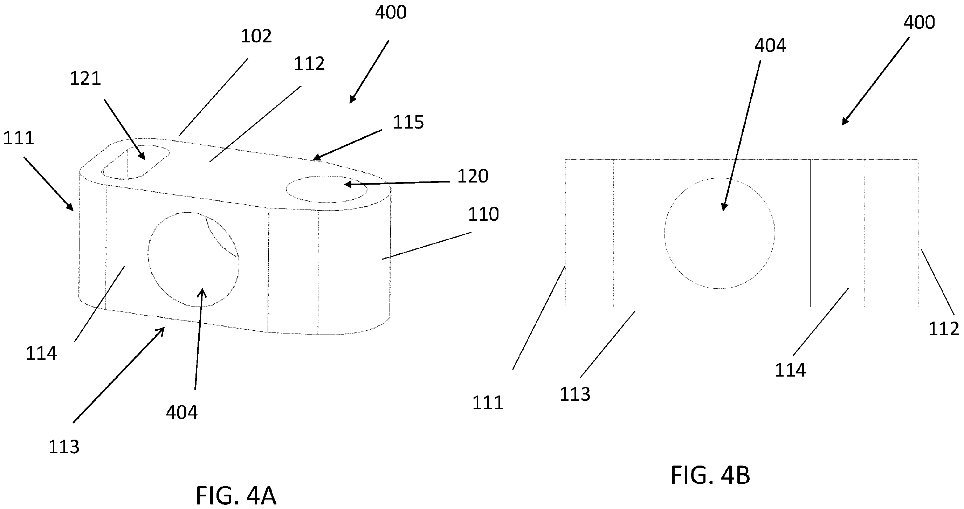

FIGS. 4A-4B schematically show an embodiment of a suspension according to the present disclosure. The suspension 400 includes any and/or all of the features discussed with respect to FIGS. 1A-3B.

As shown in FIGS. 4A-4B, the at least one aperture 404 differs from that of FIGS. 1A-1C in that the at least one aperture 404 has a circular or oval cross-section, instead of a square cross section. Suspension 400 has similar advantages as suspension 100, but may be less flexible overall.

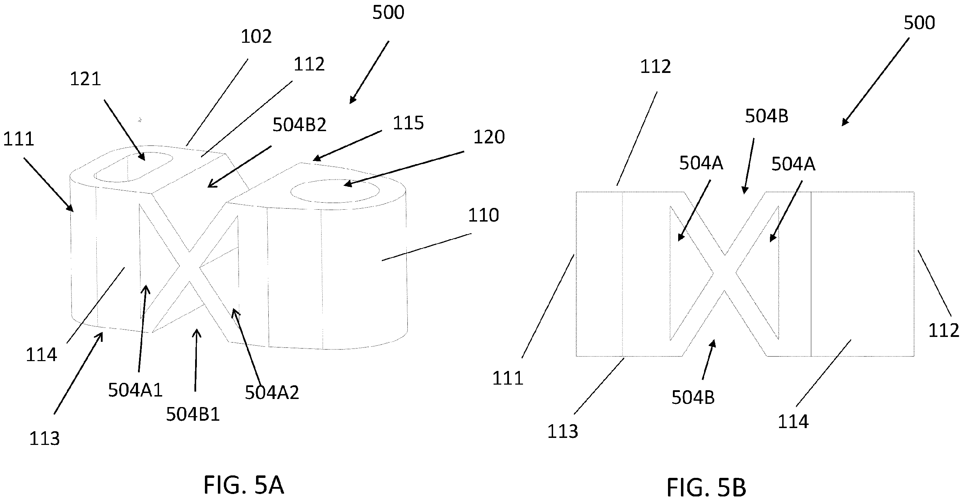

FIGS. 5A-5B schematically show an embodiment of a suspension according to the present disclosure. The suspension 500 includes any and/or all of the features discussed with respect to FIGS. 1A-4B. The suspension 500 can be more rigid version of suspension 300.

As shown in FIGS. 4A-4B, the at least one aperture 504A1/504A2/504B1/504B2 differs from the previous figures. The at least one aperture 504A1/504A2/504B1/504B2 includes an open aperture 504B1/504B2 and a closed aperture 504A1/504A2. All of the aperture of the at least one aperture 504A1/504A2/504B1/504B2 have a triangular cross section.

As shown, the top open at least one aperture 504B2 and the bottom open at least one aperture 504B 1 connect with the top surface 112 and the bottom surface 113, respectively, making them open.

The closed at least one aperture 504A1 closest to the second end 111 and the closed at least one aperture 504A2 closest to the first end 112 do not connect with any surfaces (other than the first side surface 112 and the second side surface 113) and therefore are closed apertures.

As shown, the at least one aperture 504A1/504A2/504B1/504B2 forms the body into an X cross-sectional shape. In other words, the at least one aperture 504A1/504A2/504B1/504B2 forms the first side surface 114 and/or the second side surface 115 into an X cross-sectional shape. The at least one aperture 504A1/504A2/504B1/504B2 are symmetric with respect to one another.

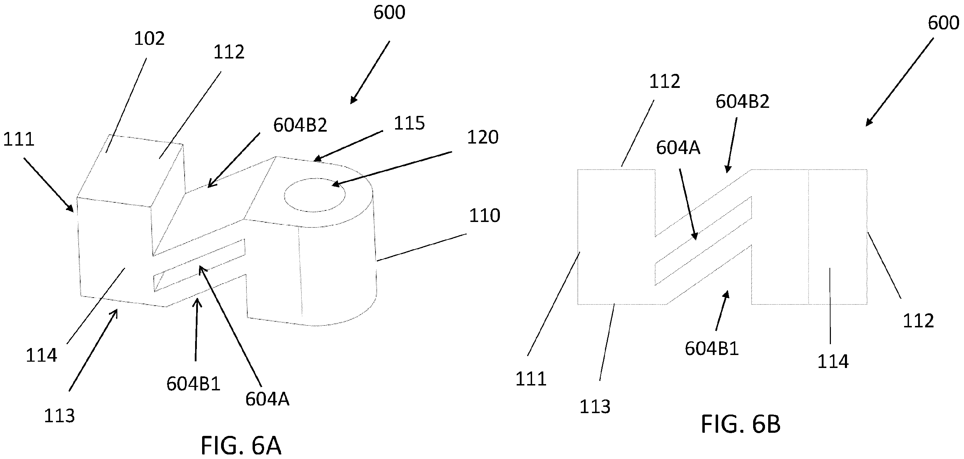

FIGS. 6A-6B schematically shows an embodiment of a suspension according to the present disclosure. The suspension 600 includes any and/or all of the features discussed with respect to FIGS. 1A-5B. Suspension 600 can allow for increased translation.

As shown in FIGS. 6A-6B, the at least one aperture 604A/604B1/604B2 differs from the previous figures. The at least one aperture 604A/604B1/604B2 includes two open apertures 604B1, 604B2 and a closed aperture 604A. The closed aperture 604A has a different cross section (e.g., rhombus shaped) than the two open apertures 604B1/604B2 (triangular). The at least one aperture 604A/604B1/604B2 are asymmetric.

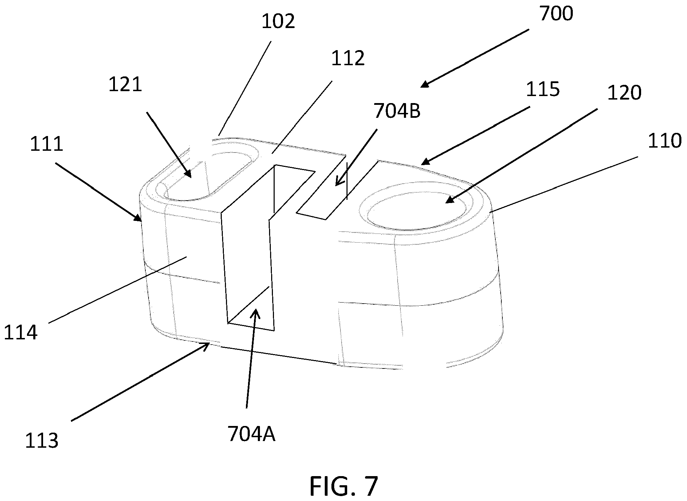

FIG. 7 schematically shows an embodiment of a suspension according to the present disclosure. The suspension 700 includes any and/or all of the features discussed with respect to FIGS. 1A-6B. Suspension 700 can allow for less rigidity in the direction of the driver.

As shown in FIG. 7, the at least one aperture 704A/704B differs from the previous figures. Both of the at least one aperture 704A/704B are open apertures. However, both of the at least one aperture 704A/704B only extend partially from the first side surface 114 to the second side surface 115 or from the second side surface 115 to the first side surface 114, respectively. Further, the at least one aperture 704A/704B are off-centre. While the at least one aperture 704A/704B both have rectangular cross-sections, other cross sections can be used as well such as disclosed herein.

FIGS. 8A-8C schematically show an embodiment of an acoustic playback system 800 with a suspension according to the present disclosure. The suspension 100 of FIGS. 1A-1C is shown, though any of the suspensions 200, 300, 400, 500, 600, 700 could be used as well.

As shown in FIG. 8A, the suspension 100 can be used to connect the speaker box 802 to the housing 804. FIG. 8B illustrates the suspension and the speaker box 802 with the housing 804 removed for convenience. FIG. 8C illustrates a cross section view. As shown in FIG. 8C, a fastener 806 can be used in the first attachment aperture 120 as the connecting member on a speaker box. The second attachment aperture 121 can receive a portion of the housing 804 acting as a connecting member of the housing.

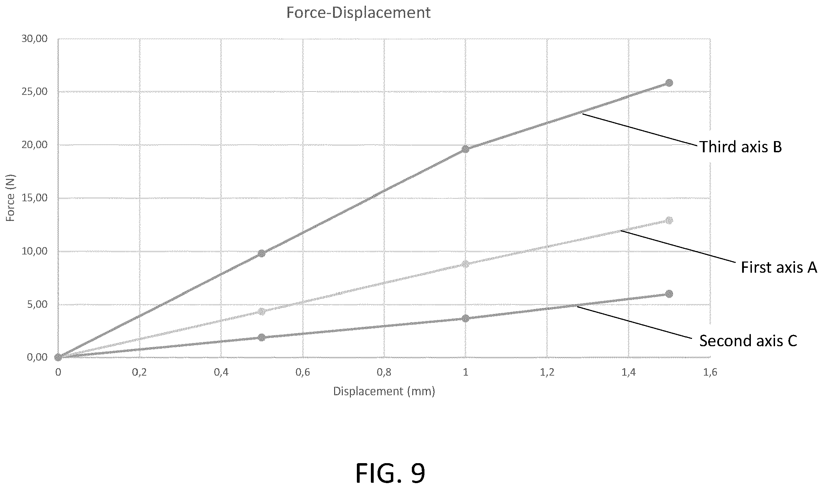

FIG. 9 illustrates force-displacement of a particular suspension of the disclosure. In particular, FIG. 9 can be used to see the rigidity along the different axes as discussed herein. The tested suspension is suspension 100 along the first axis A, the second axis B, and the third axis C. The other disclosed suspensions 200, 300, 400, 500, 600, 700 can have somewhat similar profiles.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A suspension (100, 200, 300, 400, 500, 600, 700) for an acoustic playback system and configured to connect a speaker box to a housing, the suspension comprising:
a body (102) comprising a first end (110), a second end (111) opposite the first end (110), a top surface (112), a bottom surface (113) opposite the top surface (112), a first side surface (114), and a second side surface (115) opposite the first side surface (114);
a first axis (A) extending from the first end (110) to the second end (111);
a second axis (B) extending from the top surface (112) to the bottom surface (113);
a third axis (C) extending from the first side surface (114) to the second side surface (115); and
at least one aperture (104, 204, 304, 404, 504, 604, 704) extending from the first side surface (114) to the second side surface (115);
wherein the body (102) has a higher rigidity along the first axis (A) than along the second axis (B); and
wherein the body (102) has a higher rigidity along the third axis (C) than the second axis (B).

2. The suspension of claim 1, the body comprises a first attachment aperture (120) and a second attachment aperture (121) both extending at least partially from the top surface to the bottom surface.

3. The suspension of claim 1, wherein the at least one aperture has a square cross section.

4. The suspension of claim 1, wherein the body is a silicone body.

5. The suspension of claim 1, wherein the at least one aperture comprises a plurality of apertures.

6. The suspension of claim 1, wherein the at least one aperture comprises a single aperture.

7. The suspension of claim 1, wherein the at least one aperture is generally in the middle between the first end and the second end.

8. The suspension of claim 1, wherein the at least one aperture comprises at least 15% a cross section of the body.

9. The suspension of claim 1, wherein the at least one aperture forms the body into an X cross-sectional shape or an H cross-sectional shape.

10. The suspension of claim 1, wherein the at least one aperture comprises a closed aperture.

11. The suspension of claim 1, wherein the at least one aperture comprises an open aperture.

12. The suspension of claim 1, wherein the at least one aperture comprises an open aperture and a closed aperture.

13. The suspension of claim 1, wherein the body is configured to isolate vibrations from the speaker box.

14. An acoustic playback system (800) comprising the suspension of any of the preceding claims.
